Europäisches Patentamt

European Patent Office

Office européen des brevets

(11) Veröffentlichungsnummer: **0 321 816**

**A2**

## (12) EUROPÄISCHE PATENTANMELDUNG

(21) Anmeldenummer: 88120704.7

(22) Anmeldetag: 12.12.88

(51) Int. Cl.4: **C04B 24/02 , C04B 28/14 ,
//(C04B28/14,24:02,24:38)**

(30) Priorität: 21.12.87 DE 3743403

(43) Veröffentlichungstag der Anmeldung:
28.06.89 Patentblatt 89/26

(84) Benannte Vertragsstaaten:
AT BE CH DE ES FR GB GR IT LI LU NL SE

(71) Anmelder: Henkel Kommanditgesellschaft auf
Aktien
Postfach 1100 Henkelstrasse 67
D-4000 Düsseldorf 1(DE)

(72) Erfinder: Bietz, Rolf
Heideweg 21
D-4019 Monheim 2(DE)
Erfinder: Grünberger, Eberhard, Dr.
Gustav-Mahler-Strasse 12
D-4010 Hilden(DE)

(54) Verwendung von ethoxylierten Fettalkoholen als Tensidzusatz für gipshaltige Massen.

(57) Die Verwendung von ethoxylierten $C_{12}$-$C_{22}$-Fettalkoholen mit HLB-Werten von 4,5 bis 11 als Tensidzusatz für Methylcellulose bzw. hydroxyalkylierte Derivate derselben und Gips enthaltenden Massen führt beim Anrühren der Massen mit Wasser zu einer wirksamen Unterdrückung der Knötchenbildung.

EP 0 321 816 A2

EP 0 321 816 A2

## Verwendung von ethoxylierten Fettalkoholen als Tensidzusatz für gipshaltige Massen

Die Erfindung betrifft die Verwendung von ethoxylierten $C_{12}$-$C_{22}$-Fettalkoholen mit HLB-Werten von 4,5 bis 11 als Tensidzusatz für Methylcellulose bzw. hydroxyalkylierte Derivate derselben und Gips enthaltende Massen.

Gipsmassen, die als Putze, Spachtelmassen und dergleichen eingesetzt werden, müssen vor Gebrauch mit Wasser angerührt werden. Dabei kommt es häufig zur Ausbildung von harten oder weichen Klümpchen (Knötchen); die genaue Ursache dieser unerwünschten Erscheinung, die besonders stark bei sehr feinem oder leicht zerfallendem Gips auftritt, ist jedoch nicht bekannt. Eine denkbare Ursache wären Verunreinigungen oder das für den Gips angewandte Brennverfahren sowie natürlich auch die Oberflächengröße des Gipses und der vorhandenen Methylcellulose und Benetzungsprobleme.

Die Knötchenbildung wird durch die für die Weiterverarbeitung notwendigen Zusätze (Methylcellulosen und hydroxyalkylierte Derivate derselben) verstärkt. Häufig wird empfohlen, zur Unterdrückung der Knötchenbildung dem Gips anionische Tenside zur Verbesserung der Benetzbarkeit zuzusetzen. Diese Netzmittel, die häufig auch als Luftporenbildner wirken, werden dem Gips trocken zugemischt und setzen beim Anrühren mit Wasser die Oberflächenspannung desselben herab. Weiterhin wird auch der Einsatz von Verdickern (Polyacrylamide oder Stärkeether) empfohlen, durch die der Putz beim Anrühren verdickt und dadurch die Knötchen zerrieben werden sollen.

Die vorgenannten Maßnahmen führen jedoch nur selten zum Erfolg, da die Knötchen trotz der anionischen Tenside vom Wasser nicht ausreichend durchfeuchtet werden und die beim Rühren normalerweise auftretenden Scherkräfte nicht ausreichen, um die Knötchen zu zerstören.

Die Erfindung beruht auf der Erkenntnis, daß man die Knötchenbildung wirksam unterdrücken kann, wenn man die eingangs genannten nicht-ionischen Tenside, nämlich ethoxylierte $C_{12}$-$C_{22}$-Fettalkohole mit HLB-Werten von 4,5 bis 11 zusetzt.

Unter HLB-Werten sind die nach dem sogenannten HLB-System (hydrophilic/lipophilic balance-System) errechenbaren Parameter zu verstehen, vgl. J. Falbe (Ed.), Surfactants in Consumer Products, Springer-Verlag Heidelberg 1987, S. 149 bis 153, mit weiteren Literaturhinweisen.

Die erfindungsgemäß zu verwendenden ethoxylierten $C_{12}$-$C_{22}$-Fettalkohole sind handelsübliche Produkte, die durch Ethoxylierung der entsprechenden Fettalkohole, insbesondere Laurylalkohol, Myristylalkohol, Cetylalkohol, Stearylalkohol, Arachidylalkohol, Behenylalkohol, Oleylalkohol, Elaidylalkohol, Gadoleylalkohol, Arachidonalkohol, Erucaalkohol und Brassidylalkohol erhalten werden können, wobei die HLB-Werte durch den Ethoxylierungsgrad einstellbar sind. Da die Fettalkohole üblicherweise aus Fettsäuren natürlicher, insbesondere pflanzlicher und tierischer sowie gegebenenfalls auch synthetischer Herkunft durch Hydrierung insbesondere der Methylester derselben hergestellt werden, stellen die genannten handelsüblichen Produkte durchweg Gemische verschiedener ethoxylierter Fettalkohole dar.

Bevorzugt werden im Rahmen der Erfindung ethoxylierte Fettalkohole mit 16 bis 18 Kohlenstoffatomen im Fettalkoholrest eingesetzt, die ebenfalls handelsüblich sind und technische Gemische verschiedener ethoxylierter Fettalkohole darstellen. Ein typisches Beispiel ist ein technisches Gemisch aus Oleyl-und Cetylalkohol, umgesetzt mit 5 Mol Ethylenoxid pro Mol Fettalkoholgemisch.

Bevorzugt werden die ethoxylierten Fettalkohole in einer Menge von 0,06 bis 0,5, insbesondere 0,1 bis 0,3 Gew.-%, bezogen auf Trockengewicht der Gipsmasse, verwendet.

Die unter erfindungsgemäßer Verwendung von ethoxylierten $C_{12}$-$C_{22}$-Fettalkoholen erhaltenen Gipsmassen enthalten wie üblich Methylcellulose bzw. hydroxyalkylierte Derivate derselben, z.B. Methylhydroxyethyl- und/oder Methylhydroxypropylcellulose. Sie können weiterhin übliche Zusätze enthalten, z.B. anionische Tenside, die häufig als Luftporenbildner wirken, Calciumcarbonat, Calciumhydroxid, Stärkeether, Leichtzuschläge, Pigmente und dergleichen.

Zusammen mit den ethoxylierten $C_{12}$-$C_{22}$-Fettalkoholen mit HLB-Werten von 4,5 bis 11 können den Gipsmassen auch weitere nicht-ionische Tenside zugesetzt werden, die durch Ethoxylierung und/oder Propoxylierung von Verbindungen mit reaktiven Wasserstoffatomen erhältlich sind, insbesondere Polyglykolether von Alkylphenolen mit 8 bis 12 Kohlenstoffatomen im Alkylsubstituenten, die zweckmäßigerweise ebenfalls HLB-Werte in dem genannten Bereich von 4,5 bis 11 aufweisen sollen. Derartige Derivate sind dem Fachmann geläufig, vgl. J. Falbe, a.a.O., S. 86 bis 105, sowie N. Schönfeldt, Grenzflächenaktive Ethylenoxid-Addukte, Wissenschaftliche Verlagsgesellschaft mbH, Stuttgart 1976, S. 209 bis 218, insbesondere S. 210/211, Tabelle 42. Somit kann ein Teil der erfindungsgemäß zu verwendenden ethoxylierten $C_{12}$-$C_{22}$-Fettalkohole mit HLB-Werten von 4,5 bis 11 durch andere ethoxylierte, nicht-ionische Tenside, insbesondere ethoxylierte $C_8$-$C_{12}$-Alkylphenole, ersetzt sein.

2

Die Erfindung wird anhand von Ausführungs- und Vergleichsbeispielen näher erläutert.

Beispiel 1

Zu 800 g Maschinenputzgips, enthaltend ca. 53 % Gips, 40 % gemahlenes Calciumcarbonat, 5 % Calciumhydroxid und 2 % Leichtzuschlag, wurden 1,28 g Methylhydroxyethyl-Cellulose (Viskosität 30000 mPas, 2 %-ige Lösung), 0,8 g Weinsäure und 0,8 g eines mit 5 Mol Ethylenoxid alkoxylierten Oleyl-Cetylalkohol-Gemisches mit einem HLB-Wert von 9,0 gegeben. Der Ansatz wurde in einem üblichen Mischer (Fa. Lödige) 10 Minuten gemischt. Anschließend wurde in einem üblichen Mischer (Fa. Hobart) mit 448 g Wasser angerührt (10 sec Einstreuen, 50 sec Rühren, Stufe I).

Zur Ermittlung der Knötchenbildung wurde der Putz mit einem Ausbreitmaß von 200 bis 220 mm in 5 mm Schichtdicke auf Gipskartonplatten aufgegossen. Es wurden keine Knötchen beobachtet.

Beispiel 2

Es wurde wie in Beispiel 1 verfahren, wobei anstelle des dort verwendeten nicht-ionischen Tensids ein anderes handelsübliches Tensid, bestehend aus mit 6,5 Ethylenoxideinheiten alkoxyliertem Nonylphenol und mit 5 Ethylenoxideinheiten alkoxyliertem technischen Cetyl-/Oleylalkohol (HLB-Wert 10,9 bzw. 9,0) verwendet wurde. Es traten nur sehr wenige kleine Gipsknötchen auf.

Vergleichsbeispiel 1

Es wurde wie in Beispiel 1 verfahren, wobei jedoch einmal ohne Tensidzusatz und zum anderen anstelle des dort verwendeten nicht-ionischen Tensids Natriumlaurylsulfat (HLB-Wert ca. 40) verwendet wurde. In allen Fällen kam es zur Ausbildung sehr vieler großer Knötchen.

Beispiel 3

Der Versuch des Beispiels 1 wurde wiederholt, und zwar unter Einsatz von 0,05 bzw. 0,2 Gew.-%, bezogen auf Trockengewicht der Gipsmasse, des dort verwendeten nicht-ionischen Tensids. Im ersten Fall wurden viele große, im zweiten Fall praktisch keine Gipsknötchen beobachtet.

Beispiel 4

Der Versuch des Beispiels 2 wurde wiederholt, und zwar mit 0,05 bzw. 0,2 Gew.-%, bezogen auf die Gipsmasse des dort verwendeten nicht-ionischen Tensids. Im ersten Fall wurden viele große, im zweiten Fall nur wenige kleine Gipsknötchen beobachtet.

Beispiel 5

800 g einer Handputz-Grundmischung (Zusammensetzung wie in Beispiel 1, jedoch unter Verwendung von Stuckgips und gröberem Calciumcarbonat) wurden wie im Beispiel 1 beschrieben mit 1,36 g Methylhydroxypropyl-Cellulose (Viskosität ca. 12000 mPas in 2 %-iger Lösung), 0,16 Natriumlaurylsulfat als Luftporenbildner, 0,28 g eines Hydroxypropyl-Stärkeethers (handelsüblich) als Verdicker, 1,6 g des nicht-ionischen Tensids gemäß Beispiel 1 und 700 g Wasser vermischt und angerührt. Der Test gemäß Beispiel 1 ergab nur wenige kleine Knötchen.

Vergleichsbeispiel 2

Die Wiederholung des Beispiels 5 ohne Zusatz an nicht-ionischem Tensid ergab sehr viele große Knötchen.

Beispiel 6

30 kg einer Handputz-Grundmischung wie in Beispiel 5 wurden in der dort beschriebenen Weise mit 51 g Methylhydroxypropyl-Cellulose, 9 g Natriumlaurylsulfat, 30 bzw. 60 g nicht-ionisches Tensid und 15 l Wasser vermischt bzw. angerührt, wobei das nicht-ionische Tensid mit 30 g Ethanol verdünnt und mittels einer Sprühflasche bei laufendem Mischer auf die Handputz-Grundmischung gesprüht wurde.

Die Prüfung im Technikum erfolgte in der Weise, daß nach 5 min Einsumpfen und 5 min Rühren mit einem Motorquirl die Masse an eine Gipskartonplattenwand angeworfen und in 1 cm Dicke aufgezogen wurde. Beim Einsatz von 30 g des nicht-ionischen Tensids ergaben sich einige Knötchen beim Anwerfen und einige kleinere Knötchen nach dem Abziehen. Wurde die Menge des nicht-ionischen Tensids auf 60 g gesteigert, ergaben sich nur sehr wenige Knötchen beim Anwerfen und praktisch keine Knötchen nach dem Abziehen.

Vergleichsbeispiel 3

Die Wiederholung des Beispiels 6 ohne Zusatz an nicht-ionischem Tensid ergab sehr viele große Knötchen sowohl beim Anwerfen als auch nach dem Abziehen.

Beispiel 7

Es wurde eine Vormischung aus 2 g nicht-ionischer Tenside gemäß der folgenden Tabelle 1 und 10 g eines Fertigputzes gemäß Beispiel 1 hergestellt. Das so erhaltene Gemisch wurde in einem Mischer (Fa. Lödige) 10 min mit 990 g Fertigputz gemäß Beispiel 1 vermischt und anschließend 30 sec in einem Mischer (Fa. Hobbart) mit 750 g Wasser angerührt. Der erhaltene Putz wurde 5 mm dick auf eine Gipskartonplatte aufgezogen. Nach dem Trocknen wurden Knötchen- und Rißbildung beurteilt.

Die eingesetzten nicht-ionischen Fettalkoholtenside (FA-Tenside) und die erhaltenen Ergebnisse sind in der folgenden Tabelle zusammengefaßt. In der linken Spalte der Tabelle bedeutet z.B. "$C_{16-18}$-gesättigt x 2 EO". daß ein technisches Gemisch gesättigter $C_{16-18}$-Fettalkohole, umgesetzt mit 2 Mol Ethylenoxid, eingesetzt wurde. In der Spalte "Knötchenbildung" bedeuten + + + = viele große, + + = einige große, + = einige mittelgroße, --- = keine, -- = praktisch keine und - = wenige Knötchen. In der Spalte "Rißbildung" bedeutet - = keine, + = einige und + + = viele Risse.

Tabelle

| nichtionisches FA-Tensid | HLB-Wert | Knötchenbildung | Rißbildung |
|---|---|---|---|
| $C_{16-18}$-ungesättigt x 0 EO | 4,0 | + + + | - |
| $C_{16-18}$-gesättigt x 2 EO | 4,7 | -- | - |
| $C_{12-18}$-gesättigt x 3 EO | 6,5 | -- | - |
| $C_{12-18}$-ungesättigt x 5 EO | 9,0 | -- | - |
| $C_{16-18}$-ungesättigt x 10 EO | 12,7 | + | + |
| $C_{16-18}$-gesättigt x 12 EO | 13,5 | + | + |
| $C_{16-18}$-gesättigt x 20 EO | 15,3 | + + | + + |
| $C_{16-18}$-gesättigt x 30 EO | 16,9 | + + + | + + |
| - | | + + + | - |

Aus der Tabelle ergibt sich, daß nur im Bereich der HLB-Werte von 4,5 bis 11 die Knötchenbildung wirksam vermieden wird; die so erhaltenen Gipsmassen weisen zudem keine Rißbildungstendenz auf.

Beispiel 8

Es wurde eine Gipsmasse gemäß Beispiel 7 hergestellt, jedoch unter Verwendung von 1 bzw. 3 g eines mit 2 Mol umgesetzten gesättigten $C_{12-18}$-Fettalkohols. Es wurden nur einige kleine bzw. praktisch keine Knötchen bei fehlender Rißbildung der Gipsmasse festgestellt. ·

**Ansprüche**

1. Verwendung von ethoxylierten $C_{12}$-$C_{22}$-Fettalkohlen mit HLB-Werten von 4,5 bis 11 als Tensidzusatz für Methylcellulose bzw. hydroxyalkylierte Derivate desselben und Gips enthaltende Massen.

2. Verwendung nach Anspruch 1, dadurch gekennzeichnet, daß die ethoxylierten Fettalkohole 16 bis 18 Kohlenstoffatome im Fettalkoholrest aufweisen.

3. Verwendung nach Anspruch 1 oder 2, dadurch gekennzeichnet, daß die ethoxylierten Fettalkohole in einer Menge von 0,06 bis 0,5, insbesondere 0,1 bis 0,3 Gew.-%, bezogen auf Trockengewicht der Gipsmasse, eingesetzt werden.

4. Verwendung nach mindestens einem der Ansprüche 1 bis 3, dadurch gekennzeichnet, daß ein Teil der ethoxylierten Fettalkohole durch ethoxylierte $C_8$-$C_{12}$-Alkylphenole ersetzt ist.